# EUROPÄISCHE PATENTSCHRIFT

(11) **EP 1 192 721 B1**
(45) Veröffentlichungstag und Bekanntmachung des Hinweises auf die Patenterteilung: **08.11.2006**
(21) Anmeldenummer: 99926224.9
(22) Anmeldetag: 06.07.1999
(51) Int. Cl.: H04B 1/08, H04B 1/38, H04B 1/16

(54) **TRAGBARER RUNDFUNKEMPFÄNGER MIT EINEM IDENTIFIZIERUNGSMODUL**
PORTABLE RADIO RECEIVER WITH AN IDENTIFICATION MODULE
RECEPTEUR DE RADIODIFFUSION PORTABLE A MODULE D'IDENTIFICATION

(43) Veröffentlichungstag der Anmeldung: 03.04.2002
(73) Patentinhaber: Swisscom Mobile AG, 3050 Bern (CH)
(72) Erfinder: RITTER, Rudolf, CH-3052 Zollikofen (CH)
(74) Vertreter: P&TS Patents & Technology Surveys SA
(86) Internationale Anmeldenummer: PCT/CH1999/000300
(87) Internationale Veröffentlichungsnummer: WO 2001/003311

(56) Entgegenhaltungen:
- EP-A- 0 732 813
- EP-A- 0 804 012
- EP-A- 0 813 171
- WO-A-98/57482
- GB-A- 2 313 981

## Beschreibung

Die vorliegende Erfindung betrifft einen tragbaren Rundfunkempfänger, der sowohl zum Empfang von Multimediadaten, beispielsweise von einem Unterhaltungsprogramm, als auch als Identifizierung gegenüber externen Vorrichtungen angewendet werden kann.

Als Identifizierungsmodul, beispielsweise für öffentliche Verkehrsmittel, für Skilifts, für Theater oder Kinos, wurden schon verschiedene Arten von kontaktlosen ldentifizierungsmodulen vorgeschlagen. Es ist beispielsweise schon bekannt, ein RFID-Element (Radio Frequency Identification) in einer Chipkarte oder in einer Armbanduhr zu integrieren. Im RFID-Element werden Benutzeridentifizierungsdaten, beispielsweise die Benutzernummer, und Berechtigungsdaten, beispielsweise eine käuflich erworbene Berechtigung für bestimmte Dienstleistungen, abgelegt. Geeignete Leser an den Verwendungsorten, beispielsweise an den Türen von Vehikeln der öffentlichen Verkehrsmittel, können auf diese Daten kontaktlos zugreifen und gegebenenfalls die Dienstleistung freigeben, beispielsweise die Tür des Vehikels öffnen, und eventuell diese Dienstleistung verrechnen.

Ein Nachteil dieser Art von ldentifizierungsmodulen ist, dass es kein einfaches und praktisches Mittel gibt, um neue Daten, beispielsweise eine neue Berechtigung, oder neue Programme, beispielsweise für neue Funktionen oder neue Dienste, in ein Identifizierungsmodul fernzuladen. Der Benutzer muss sich in den meisten Fällen persönlich mit seinem Modul an einen Schalter und an einen Automat begeben, um neue Daten in sein Modul zu kopieren. Dadurch werden die Einsatzmöglichkeiten solcher Identifizierungsmodulen stark eingeschränkt. Ein anderer Nachteil ist, dass Dienstanbieter kein einfaches Mittel haben, um ein bestimmtes ldentifizierungsmodul zu sperren, beispielsweise wenn das Modul gestohlen worden ist oder nach einer betrügerischen Handlung. Die Sperrung kann erst erfolgen, wenn das Modul in ein entsprechendes Gerät eingeführt wird.

SIM-Karten (Subscriber Identification Module) für Mobiltelefone, die auch eine kontaktlose Schnittstelle enthalten, sind schon bekannt. Dadurch kann die in der Karte gespeicherte Benutzeridentifizierung im Mobilnetz auch verwendet werden, um den Benutzer gegenüber externen Vorrichtungen zu identifizieren. Neue Daten können über den Mobilfunkkanal ferngeladen werden. Eine solche Datenübermittlung erfolgt jedoch durch einen kostenpflichtigen Verbindungsaufbau oder eine SMS-Übermittlung, und mit einer geringen Bandbreite, so dass diese Lösung nicht für alle Zwecke geeignet ist.

Es ist eine Aufgabe dieser Erfindung, ein neues und besseres Identifizierungsmodul vorzuschlagen.

Insbesondere ist es eine Aufgabe dieser Erfindung, ein neues Identifizierungsmodul vorzuschlagen, in welchem Daten aus einem entfernten Sender, beispielsweise Daten eines Dienstanbieters, ferngeladen werden können, und in welchem benutzerspezifische Daten gespeichert sind, die über eine kontaktlose Schnittstelle an externe Geräte im Nahbereich (bis zu einigen Metern) übertragen werden können.

Gemäss der vorliegenden Erfindung werden diese Ziele insbesondere durch die Merkmale der unabhängigen Ansprüche erreicht. Weitere vorteilhafte Ausführungsformen gehen ausserdem aus den abhängigen Ansprüchen und der Beschreibung hervor.

Insbesondere werden diese Ziele dadurch erreicht, dass das ldentifizierungsmodul eine kontaktlose Schnittstelle umfasst und in einem tragbaren Rundfunkempfänger integriert ist. Ist der Rundfunkempfänger ein digitaler Rundfunkempfänger, beispielsweise ein DAB oder DVB-Rundfunkempfänger, können dann neue Daten und/oder Programme in das ldentizierungsmodul als programmbegleitende Daten ferngeladen werden. Das Identifizierungsmodul kann ausserdem verwendet werden, um ein Rundfunkprogramm, beispielsweise ein Unterhaltungsprogramm oder programmbegleitende Internet-Daten, zu empfangen und wiederzugeben.

Die kontaktlose Funkschnittstelle erlaubt eine Datenübertragung über kurze Entfernungen (sogenannte "short distance wireless RF transmission"), typischerweise bis zu einigen Metern. Sie verwendet vorzugsweise ein standardisiertes Protokoll und standardisierte Frequenzen. Dadurch können verschiedene Rundfunkempfänger über diesen Kanal miteinander oder mit anderen Geräten, beispielsweise mit Palmtops, Laptops, externen Druckern, Mobiltelefonen usw. kommunizieren. Beispielsweise enthält der Rundfunkempfänger eine kontaktlose Schnittstelle gemäss dem Bluetooth- oder HomeRF-Standard. In einer Variante enthält der Rundfunkempfänger ein RFID-Element, das gemäss einem bekannten RFID-Protokoll funktioniert.

Die Patentschrift GB2313981 beschreibt einen mit einem Mobilfunkteil (GSM-Empfänger) kombinierten DAB-Funkempfänger (Digital Audio Broadcasting). Das Gerät kann somit Daten, insbesondere Internet Daten, wie auch DAB-programmbegleitende Daten empfangen und verfügt über einen GSM-Rückkanal, um Daten in der anderen Richtung zu senden. Es ist jedoch nicht vorgesehen, den Empfänger mit einem Identifizierungsmodul und mit einer kontaktlosen Schnittstelle für den Nahbereich zu versehen.

EP804012 beschreibt einen DAB-Empfänger, welcher über eine lokale Schnittstelle (RS232, Infrarot oder Funk) mit einem Mobilgerät verbunden ist. Dieses Gerät kann jedoch keine benutzerspezifischen Daten an externe Vorrichtungen im Nahbereich senden und kann somit nicht als ldentifizierungselement gegenüber externen Vorrichtungen im Nachbereich verwendet werden.

EP732813 beschreibt einen FM-Audioempfänger mit einer Chipkarte, in welcher benutzerspezifische Daten abgelegt werden. Der Empfänger enthält keine kontaktlose Schnittstelle im Nahbereich und kann auch nicht als Identifizierungselement verwendet werden.

In einer bevorzugten Variante enthält das ldentifizierungsmodul biometrische Parameter des Benutzers des Identifizierungsmoduls. Beispielsweise enthält das Modul ein Foto des Benutzers, das über die kontaktlose Schnittstelle übertragen wird. Auf diese Weise kann ein Kontrolleur prüfen, ob der Benutzer des Identifizierungsmoduls wirklich der berechtigte Inhaber ist.

In einer bevorzugten Variante ist der Rundfunkempfänger miniaturisiert und beispielsweise in einer Chipkarte, in einer Armbanduhr, in einem Schlüsselanhänger, in einem Mobiltelefon oder einer Komponente eines Mobiltelefones (Batteriesatz, auswechselbares Modul usw.) integriert.

Das Identifizierungsmodul umfasst vorzugsweise Eingabemittel, beispielsweise eine Tastatur und/oder ein Touchscreen, mit welchen Daten eingegeben werden können. Chipkarten mit einer Tastatur werden unter anderem in der Patentanmeldung EP0813171 beschrieben. Auf diese Weise können zum Beispiel Bestätigungen zur Belastung eines Geldkontos eingegeben und über die benannte kontaktlose Schnittstelle weitergeleitet werden. Bestimmte Identifizierungsmodule, beispielsweise gestohlene, können auch auf diese Weise gesperrt werden.

Im folgenden werden anhand der beigefügten Zeichnungen bevorzugte Ausführungsbeispiele der Erfindung näher beschrieben. Es zeigen:
Die Figur 1 eine schematische Ansicht eines Identifizierungsmoduls, in dieser Ausführungsform als tragbarer Radioempfänger gebaut.
Die Figur 2 ein Blockdiagramm des Radioempfängers.
Die Figur 3 eine schematische Ansicht eines Identifizierungsmoduls, in dieser Ausführungsform als Armbanduhr gebaut.
Die Figur 4 eine schematische Ansicht eines Systems, in welchem der erfindungsgemässe Rundfunkempfänger eingesetzt werden kann.

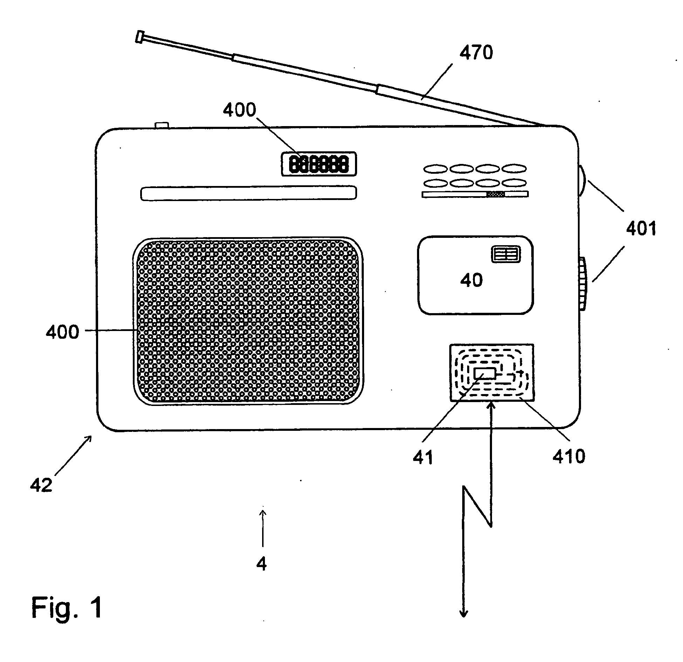

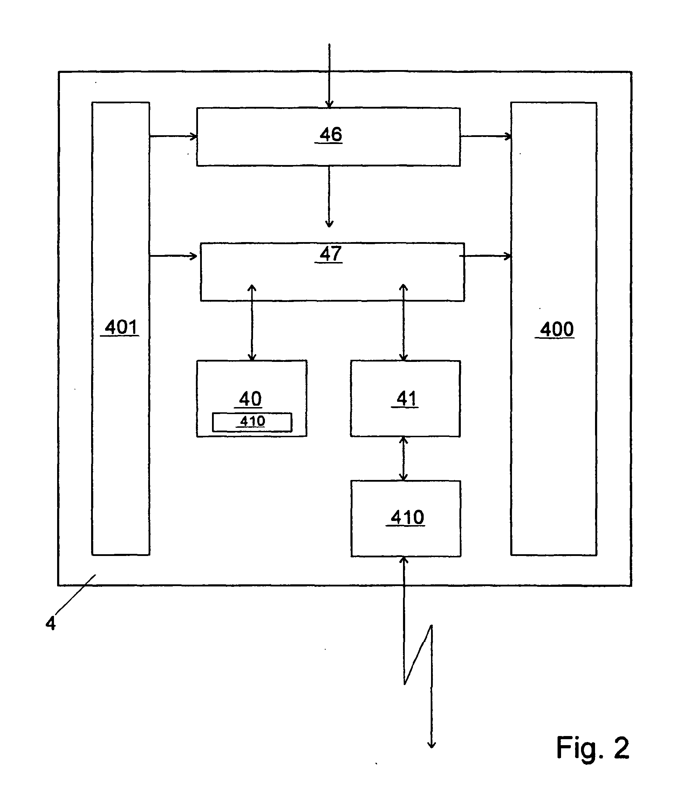

Die Figur 1 zeigt in schematischer Weise einen erfindungsgemässen Rundfunkempfänger 4, in diesem Beispiel in einem grösseren Gehäuse 42 untergebracht, in welchem ein Identifizierungsmodul 40 mit benutzerspezifischen Daten integriert ist. Der Rundfunkempfänger enthält nicht dargestellte Empfangsmittel (Nr. 46 auf Fig. 2), mit welchen ein analoges oder digitales Rundfunkprogramm eines entfernten Senders empfangen werden kann, und Wiedergabemittel 400, um dieses Programm wiederzugeben. Im dargestellten Beispiel bestehen die Wiedergabemittel 400 nur aus einem Lautsprecher und einer einfachen Flüssigkristallanzeige. Der Rundfunkempfänger könnte jedoch einen besseren Matrixbildschirm aufweisen, beispielsweise eine LCD-Anzeige und/oder vorzugsweise eine VRD-Anzeige (Virtual Retina Display), mit welchem bewegte Bilder und WEB-Seiten dargestellt werden können. In einer bevorzugten Ausführungsform der Erfindung ist der Rundfunkempfänger ein DAB- oder DVB (Digital Audio-Broadcasting bzw. Digital Video Broadcasting) Empfänger, der auch Multimediadaten, einschliesslich fixen und animierten Bilder, Applets, Ton, Hypertext-Dokumente usw. beispielsweise als programmbegleitende Daten empfangen und visuell und/oder akustisch wiedergeben kann.

Der Rundfunkempfänger verfügt ausserdem über Eingabemittel 401, zum Beispiel über einfache Tasten wie im dargestellten Beispiel, über ein sogenanntes Touchscreen, das mit einem Stift bedient wird, über ein Mikrophon mit einem Sprachanalyseprogramm, und/oder über ein Gerät zur Ermittlung der Augenposition. Mit diesen Eingabemitteln.kann der Benutzer den Empfang vom Rundfunkprogramm und die Kommunikation mit externen Geräten ansteuern. Der Rundfunkempfänger 42 verfügt ausserdem über nicht dargestellte autonome Energieversorgungsmittel, beispielsweise über eine Batterie oder Solarzellen.

Der Rundfunkempfänger 42 kann als Identifizierung- und Berechtigungsmittel eingesetzt werden, um auf verschiedene Dienste mit externen Vorrichtungen im Nahbereich zugreifen zu können. Diese . Beschreibung zeigt detailliert das Beispiel der Kontrolle der Fahrkarten in einem Vehikel des öffentlichen Verkehrs, obwohl der erfindungsgemässe Rundfunkempfänger auch eingesetzt werden kann, um den Zugriff auf andere Dienste zu erlauben, beispielsweise für Eintrittskarten für Kinos, Theater, Ausstellungen usw., für Führerscheinkontrolle, für Skilifts usw.

Erfindungsgemäss enthält der Rundfunkempfänger 42 eine kontaktlose Schnittstelle 41, über welche eine Funkverbindung im Nahbereich (typischerweise bis maximal 20 Meter) hergestellt werden kann. Die kontaktlose Schnittstelle umfasst vorzugsweise einen Chip 41, beispielsweise einen RFID-Chip, und eine Antenne 410. Der Chip umfasst ein Funkteil und Datenverarbeitungsmittel und kann Daten in einem definierten Frequenzbereich, beispielsweise in einem ISM-Frequenzbandbereich (Industrial Scientific and Medical Applications) oder im Frequenzbereich zwischen 2,4 bis 2,5 GHz, senden und empfangen. Die Antenne 410 kann je nach angewendeter Frequenz auch im Chip integriert werden, oder aus einer gewickelten Spule bestehen.

Das Identifizierungsmodul 40 besteht beispielsweise aus einer entfernbaren Chipkarte, beispielsweise aus einer SIM-Karte (Subscriber Identification Module). Auf diese Weise kann beispielsweise eine Berechtigung, beispielsweise eine Fahrkarte, in Form einer Chipkarte vertrieben werden, die der Benutzer dann nur noch in seinem Endgerät einstecken muss. Als Variante können die benutzerspezifischen Daten auch in einem geschützten Speicherbereich (virtuelle SIM-Karte) des Rundfunkempfängers 4 abgelegt werden.

Die im Identifizierungsmodul 40 gespeicherten benutzerspezifischen Daten enthalten beispielsweise Identifizierungs- und Berechtigungsdaten des Benutzers. Die Identifizierungsdaten des Benutzers umfassen vorzugsweise die Identitität des Benutzers, beispielsweise seinen Namen und/oder seine Benutzernummer. Falls das Identifizierungmodul 40 auch als SIM-Karte (Subscriber Identification Module) für ein Mobilfunknetz eingesetzt werden kann, kann die Identität des Benutzers auch aus seiner IMSI-Nummer (International Mobile Subscriber Identification) bestehen. In einer Variante umfassen die Identifizierungsdaten auch biometrische Parameter des Benutzers, beispielsweise ein Foto, Stimmenparameter, Iris und/oder Retinaparameter, einen Fingerabdruck usw. Mit diesen biometrischen Parametern kann mit grosser Sicherheit festgestellt werden, ob der Benutzer des Identifizierungsmoduls auch der berechtigte Inhaber ist.

Je nach Anwendung können die Berechtigungsdaten verschiedene Typen von Daten enthalten. Falls das Identifizierungsmodul 40 zur Identifizierung von Passagieren in öffentlichen Verkehrsmitteln benutzt wird, umfassen die Berechtigungsdaten beispielsweise den Typ und die Gültigkeit des Abonnements und/oder der Fahrkarte des Benutzers, seine Sitzplatzreservationen, eventuelle Sperrungsdaten, wenn das Abonnement gesperrt ist, usw.

Die kontaktlose Schnittstelle 41 erlaubt vorzugsweise eine bidirektionale Datenübertragung mit externen Geräten. Vorzugsweise wird für diese Schnittstelle ein standardisiertes Protokoll eingesetzt, beispielsweise das Bluetooth- oder HomeRF-Standard, so dass eine Kommunikation mit standardisierten externen Geräten 42 ermöglicht wird. Die kontaktlose Schnittstelle 41 kann aber auch aus einem RFID-Element (Radio Frequency Identification) bestehen. Je nach Variante kann der Rundfunkempfänger 42 über eigene Energieversorgungsmittel verfügen, zum Beispiel über eine Batterie oder Solarzellen, oder von externen Geräten gespiesen werden.

Die Figur 2 zeigt ein funktionelles Blockschema eines erfindungsgemässen Rundfunkempfängers 4. Der Rundfunkempfänger enthält Bedienungselemente 401, Wiedergabemittel 400, ein Funkteil 46, Datenverarbeitungsmittel 47, ein Identifizierungsmodul 40 und eine kontaktlose Schnittstelle 41 mit einer Antenne 410 zur kontaktlosen Datenübertragung im Nahbereich. ldentifizierungs- und Berechtigungsdaten werden in einem Speicherbereich 400 des Identifizierungsmoduls 40 abgelegt, wobei diese Daten mit den Bedienungselementen 401, mit programmbegleitenden Daten, die vom Funkteil 46 empfangen werden, und/oder von einer externen Vorrichtung über die kontaktlose Schnittstelle gelesen bzw. geändert werden können. Andere Komponenten können auch im Rahmen der Erfindung im Rundfunkempfänger 4 integriert werden, beispielsweise ein Standortbestimmungsempfänger, zum Beispiel ein GPS-Empfänger, und/oder ein Mobilfunkteil, beispielsweise ein GSM- oder UMTS-Mobilfunkteil.

Die Datenverarbeitungsmittel 47 können vorzugsweise Daten, Applets oder andere Programme, die vom Funkteil 46 empfangen werden, bearbeiten oder ausführen, und die Funktionen des Identifizierungsmoduls 40 und des Kommunikationsteils 41 entsprechend ansteuern. Vorzugsweise verfügt das Identifizierungsmodul 40 auch über eigene Datenverarbeitungsmittel, mit welchen es empfangene Daten und Programme bearbeiten kann. Auf diese Weise können beispielsweise neue Berechtigungen oder Änderungen in den Identifizierungsdaten ferngeladen werden.

Die Datenverarbeitungsmittel enthalten vorzugsweise einen Filter, beispielsweise einen Softwarefilter. Mit diesem Filter können selektierte Daten in der empfangenen Datenflut filtriert und dann bearbeitet werden. Der Filter kann vorzugsweise vom Benutzer je nach Interesse und Geschmack eingestellt werden. Vorzugsweise kann auch mindestens ein Dienstanbieter, beispielsweise der Dienstanbieter, der das Identifizierungsmodul 40 zur Verfügung gestellt hat, auch den Filter einstellen. Der Filter erlaubt beispielsweise, dass persönliche Meldungen an allen Empfängern im Broadcast-Modus ausgesendet werden aber nur vom in der Meldung angegebenen Empfänger empfangen, gespeichert und eventuell bearbeitet werden. Auf diese Weise können beispielsweise Sperrungsdaten zur Sperrung eines bestimmten oder einer Liste von Identifizierungsmodulen von einem zentralen Sender, beispielsweise eines DAB-Senders, ausgesendet werden. Diese Sperrungsdaten werden von allen Empfängern empfangen, jedoch nur von den Filtern in den angegebenen Modulen festgehalten, so dass Berechtigungsdaten in bestimmten adressierten Rundfunkempfängern gesperrt werden können.

Enthält der Rundfunkempfänger ein Standortbestimmungsmittel, beispielsweise einen GPS-Empfänger, kann vorzugsweise die Filterfunktion vom momentanen Standort des Benutzers abhängig sein. Auf diese Weise können mit einem Broadcast-Sender, der Daten in allen Richtungen sendet, standortsabhängige Informationen und programmbegleitende Daten gesendet werden.

Die im Identifizierungsmodul 40 gespeicherten benutzerspezifischen Daten umfassen vorzugsweise Identifizierungsdaten des Benutzers, beispielsweise seinen Namen, seine Benutzernummer oder, falls das Modul auch als SIM-Karte für ein Mobiltelefon angewendet werden kann, seine IMSI-Nummer (International Mobile Subscriber Identification). In einer bevorzugten Variante umfassen ausserdem die Identifizierungsdaten des Benutzers ein elektronisches Zertifikat, mit welchem gesendete Meldungen signiert werden können. Mit diesem Zertifikat können mit einem asymmetrischen Verschlüsselungsalgorithmus kodierte Daten an Dienstanbieter und externe Vorrichtungen ohne Sicherheitsrisiko übertragen werden.

In einer bevorzugten Variante der Erfindung enthalten die Identifizierungsdaten biometrische Parameter des Benutzers, beispielsweise ein Foto des Benutzers. Auf diese Daten kann der Benutzer einer externen Vorrichtung, beispielsweise ein Fahrkartenkontrolleur in einem Zug, über die kontaktlose Schnittstelle zugreifen, beispielsweise das gespeicherte Foto des Benutzers sich anzeigen lassen und somit prüfen, ob der Benutzer des Rundfunkempfängers auch der berechtigte Inhaber des Identifizierungsmoduls ist.

Die benutzerspezifischen Daten können Berechtigungsdaten umfassen, beispielsweise die Berechtigung für die Benutzung einer externen Vorrichtung. Je nach Anwendung können die Berechtigungsdaten verschiedene Typen von Daten enthalten. Falls das ldentifizierungsmodul 40 zur Identifizierung von Passagieren in öffentlichen Verkehrsmitteln benutzt wird, umfassen die Berechtigungsdaten beispielsweise den Typ und die Gültigkeit des Abonnements und/oder der Fahrkarte des Benutzers, seine Sitzplatzreservationen, eventuelle Sperrungsdaten zur Sperrung einer bestimmten Berechtigung im Identifizierungsmodul usw.

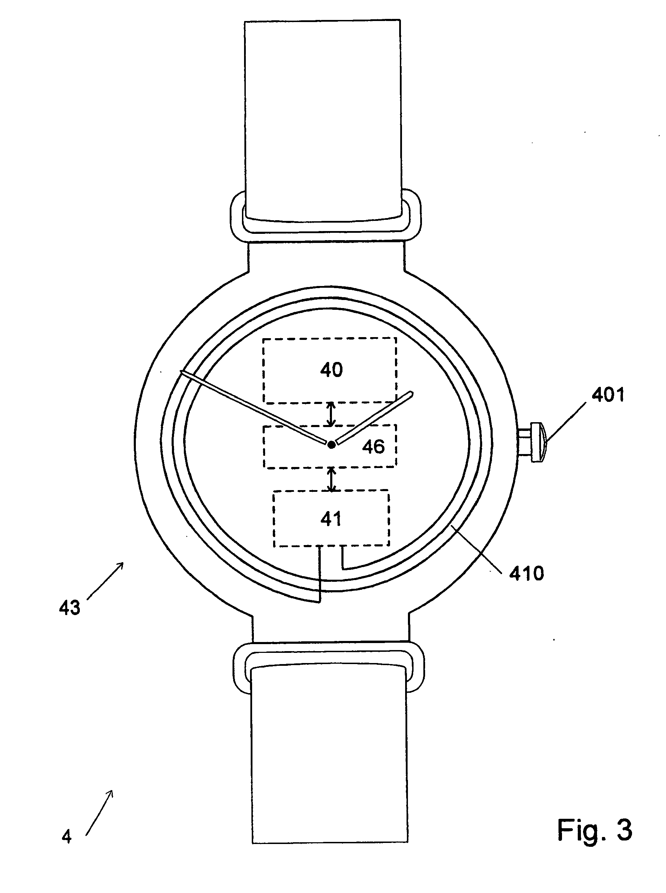

Die Figur 3 zeigt eine andere Ausführungsform der Erfindung, in welcher der Rundfunkempfänger in einer Armbanduhr 43 integriert ist. In diesem Fall verfügt der Rundfunkempfänger nur über eingeschränkte Bedienungsmittel, beispielsweise über eine begrenzte Anzahl von Tasten, und über einfache Wiedergabemittel, beispielsweise über eine nicht dargestellte LCD oder VRD-Anzeige (Virtual Retina Display), mit welchen die über den Funkteil 46 empfangenen Daten und programmbegleitenden Daten wiedergegeben werden können. Das Identifizierungsmodul 40 ist vorzugsweise als Speicherbereich in den nicht dargestellten Datenverarbeitungsmitteln realisiert; die kontaktlose Schnittstelle besteht beispielsweise aus einem RFID-Chip 41 mit einer Antenne 410 im Gehäuse, im Armband oder im Glasreif.

In einer nicht dargestellten Variante der Erfindung könnte auch der Rundfunkempfänger in einer Chipkarte oder in einem anderen tragbaren und elektrisch autonomen Gerät integriert werden, beispielsweise in einem Palmtop, in einem Laptop, in einem Schlüsselanhänger usw.

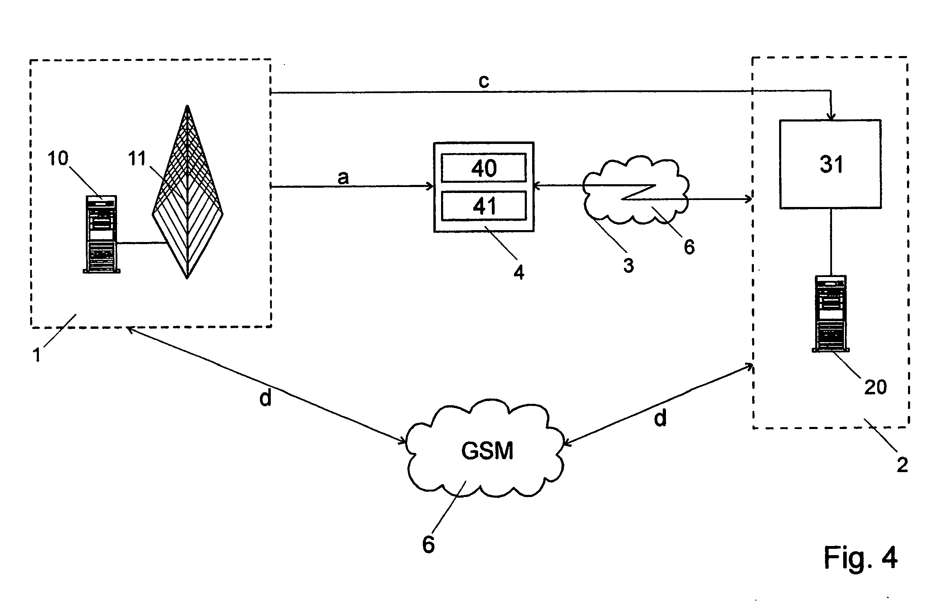

Die Figur 4 zeigt als Beispiel eine schematische Ansicht eines Systems, in welchem der erfindungsgemässe Rundfunkempfänger 4 eingesetzt werden kann. Der Rundfunkempfänger 4 mit einem ldentifizierungsmodul 40 kann in diesem System Daten, beispielsweise programmbegleitende Daten, aus einem externen Sender, beispielsweise aus einem DAB- oder DVB-Sender 1, empfangen (Pfeil a), wobei der Sender 1 Sendemittel 11 und Programmvorbereitungsmittel 10 umfasst. Der Rundfunkempfänger 4 verfügt über eine kontaktlose Schnittstelle 41, über welche er mit externen Geräten 2 im Nahbereich (typischerweise bis zu 20 Metern) kommunizieren kann (Pfeil b). Die Schnittstelle benutzt vorzugsweise eine standardisierte Schnittstelle, beispielsweise eine Bluetooth-, HomeRF- oder RFID-Schnittstelle, damit der Rundfunkempfänger mit einer Vielzahl verschiedener externen Geräten von verschiedenen Typen kommunizieren kann. Einige dieser Geräte können ebenfalls über ein Rundfunkteil verfügen, mit welchem sie Daten aus dem Sender 1 empfangen können (Pfeil c).

Die externe Vorrichtung verfügt ebenfalls über eine kontaktlose Schnittstelle 31 und über Datenverarbeitungsmittel 20, im dargestellten Beispiel über einen Rechner. Die externe Vorrichtung kann tragbar sein und beispielsweise von einem Fahrkartenkontrolleur in einem Vehikel der öffentlichen Verkehrsmittel verwendet werden, um die Identität und die Berechtigung der Passagiere zu prüfen. In einer anderen Variante besteht die externe Vorrichtung aus einem Rechner 20 in einem Vehikel, der über einen nicht dargestellten Datenbus mit einer Vielzahl von Sendern-Empfängern im Vehikel verbunden ist, so dass der Rechner 20 auf die benutzerspezifischen Daten aller Passagiere im Vehikel zugreifen kann.

Das externe Gerät 2 kann ein anderes Kommunikationsteil umfassen, beispielsweise ein Mobilfunkteil, über welche es Daten in beiden Richtungen mit anderen Geräten, unter anderem mit dem Server 10 des Senders 1, austauschen kann (Pfeil d).

## Patentansprüche

1. Tragbarer Rundfunkempfänger (4), mit welchem Programme eines zentralen Rundfunksenders (1) und programmbegleitende Daten empfangen werden können, mit:
einem Identifizierungsmodul (40) in Form einer entfernbaren Chipkarte, in welchem benutzerspezifischen Daten abgelegt sind,
einer kontaktlosen Schnittstelle (41), über welche eine Funkverbindung mit externen Vorrichtungen im Nahbereich hergestellt werden kann, um die benannten benutzerspezifischen Daten an diese externen Vorrichtungen zu senden,
**dadurch gekennzeichnet, dass** benannte empfangene programmbegleitende Daten im besagten Identifizierungsmodul (40) abgelegt sind.

2. Tragbarer Rundfunkempfänger gemäss dem vorhergehenden Anspruch, **dadurch gekennzeichnet, dass** die benannten empfangenen programmbegleitende Daten vom benannten ldentifizierungsmodul (40) bearbeitet werden können.

3. Tragbarer Rundfunkempfänger gemäss einem der vorhergehenden Ansprüche, **dadurch gekennzeichnet, dass** er DAB-programmbegleitende Daten empfangen kann.

4. Tragbarer Rundfunkempfänger gemäss einem der vorhergehenden Ansprüche, **dadurch gekennzeichnet, dass** er DVB-programmbegleitende Daten empfangen kann.

5. Tragbarer Rundfunkempfänger gemäss einem der vorhergehenden Ansprüche, **dadurch gekennzeichnet, dass** die benannten Datenverarbeitungsmittel Applets und/oder Programme, die in den benannten programmbegleitenden Daten erhalten sind, ausführen können.

6. Tragbarer Rundfunkempfänger gemäss einem der vorhergehenden Ansprüche, **dadurch gekennzeichnet, dass** die benannte kontaktlose Schnittstelle (41) ein RFID-Element umfasst.

7. Tragbarer Rundfunkempfänger gemäss einem der Ansprüche 1 bis 5, **dadurch gekennzeichnet, dass** die benannte kontaktlose Schnittstelle (41) eine Bluetooth-Schnittstelle ist.

8. Tragbarer Rundfunkempfänger gemäss einem der Ansprüche 1 bis 5, **dadurch gekennzeichnet, dass** die benannte kontaktlose Schnittstelle (41) eine HomeRF-Schnittstelle ist.

9. Tragbarer Rundfunkempfänger gemäss einem der vorhergehenden Ansprüche, **dadurch gekennzeichnet, dass** die benannten benutzerspezifischen Daten Identifizierungsdaten des Benutzers umfassen.

10. Tragbarer Rundfunkempfänger gemäss dem vorhergehenden Anspruch, **dadurch gekennzeichnet, dass** die benannten Identifizierungsdaten ein elektronisches Zertifikat des Benutzers umfassen.

11. Tragbarer Rundfunkempfänger gemäss dem Anspruch 9, **dadurch gekennzeichnet, dass** die benannten Identifizierungsdaten ein Bild des Benutzers umfassen.

12. Tragbarer Rundfunkempfänger gemäss dem Anspruch 9, **dadurch gekennzeichnet, dass** die benannten Identifizierungsdaten biometrische Parameter des Benutzers umfassen.

13. Tragbarer Rundfunkempfänger gemäss einem der vorhergehenden Ansprüche, **dadurch gekennzeichnet, dass** die benannten benutzerspezifischen Daten Berechtigungsdaten des Benutzers für die Benutzung der benannten externen Vorrichtungen umfassen.

14. Tragbarer Rundfunkempfänger gemäss dem vorhergehenden Anspruch, **dadurch gekennzeichnet, dass** die benannten Berechtigungsdaten mit programmbegleitenden Daten geändert werden können.

15. Tragbarer Rundfunkempfänger gemäss dem vorhergehenden Anspruch, **dadurch gekennzeichnet, dass** die benannten Berechtigungsdaten die Benutzung von öffentlichen Verkehrsmitteln betreffen.

16. Tragbarer Rundfunkempfänger gemäss einem der vorhergehenden Ansprüche, **dadurch gekennzeichnet, dass** er Standortbestimmungsmittel umfasst.

17. Tragbarer Rundfunkempfänger gemäss dem vorhergehenden Anspruch, **dadurch gekennzeichnet, dass** die benannten Standortbestimmungsmittel den Standort aus Satellitensignalen ermitteln können.

18. Tragbarer Rundfunkempfänger gemäss dem vorhergehenden Anspruch, **dadurch gekennzeichnet, dass** die benannten Standortbestimmungsmittel einen GPS-Empfänger umfassen.

19. Tragbarer Rundfunkempfänger gemäss einem der vorhergehenden Ansprüche, **dadurch gekennzeichnet, dass** er einen Datenfilter für programmbegleitende Daten umfasst.

20. Tragbarer Rundfunkempfänger gemäss dem vorhergehenden Anspruch, **dadurch gekennzeichnet, dass** der benannte Datenfilter vom Standort des Benutzers abhängig ist.

21. Tragbarer Rundfunkempfänger gemäss dem Anspruch 19, **dadurch gekennzeichnet, dass** der benannte Datenfilter vom Benutzer eingestellt werden kann.

22. Tragbarer Rundfunkempfänger gemäss einem der vorhergehenden Ansprüche, **dadurch gekennzeichnet, dass** er ein Mobilfunkkommunikationsteil umfasst.

23. Tragbarer Rundfunkempfänger gemäss dem vorhergehenden Anspruch, **dadurch gekennzeichnet, dass** das benannte Mobilfunkkommunikationsteil einen GSM-Empfänger umfasst.

24. Tragbarer Rundfunkempfänger gemäss dem Anspruch 22, **dadurch gekennzeichnet, dass** das benannte Mobilfunkkommunikationsteil einen UMTS-Empfänger umfasst. '

25. Tragbarer Rundfunkempfänger gemäss einem der vorhergehenden Ansprüche, **gekennzeichnet durch** einen zusätzlichen Speicherbereich, in welchem über den benannten Funkempfänger ferngeladene Sperrungsdaten gespeichert werden können.

26. Tragbarer Rundfunkempfänger gemäss einem der vorhergehenden Ansprüche, **gekennzeichnet durch** visuelle Wiedergabemittel (400).

27. Tragbarer Rundfunkempfänger gemäss dem vorhergehenden Anspruch, **gekennzeichnet durch** VRD-Wiedergabemittel.

28. Tragbarer Rundfunkempfänger gemäss einem der vorhergehenden Ansprüche, in Form einer Chipkarte (44).

29. Tragbarer Rundfunkempfänger gemäss einem der vorhergehenden Ansprüche, in Form einer Armbanduhr (43).

30. Verwendung eines tragbaren Rundfunkempfängers (4) gemäss einem der vorhergehenden Ansprüche als Identifizierungsmodul für Verkehrstelematik-Anwendungen.

31. Verfahren, um die Berechtigung einer Vielzahl von Benutzern aus einem zentralen Ort zu verwalten, **gekennzeichnet durch**:
Aussendung von Berechtigungsdaten im Broadcast-Modus als programmbegleitende Daten,
Empfang dieser Berechtigungsdaten in tragbaren Rundfunkempfängern (4) gemäss einem der Ansprüche 1 bis 29, mit welchen die Benutzer versehen sind,
Filtrierung der Berechtigungsdaten betreffend des Benutzers eines Rundfunkempfängers in einem Filter im Rundfunkempfänger,
Speicherung der Berechtigungsdaten im Identifizierungsmodul.

## Claims

1. Portable radio receiver (4), with which programs of a central radio sender (1) and program-accompanying data can be received, having:
an identification module (40) in the form of a removable chip-card, in which user-specific data are stored,
a contactless interface (41) over which a radio connection can be established with external devices at close range in order to send said user-specific data to these external devices,
**characterized in that** said received program-accompanying data are stored in said identification module (40).

2. Portable radio receiver according to the preceding claim, **characterized in that** said received program-accompanying data can be processed by said identification module (40).

3. Portable radio receiver according to the preceding claims, **characterized in that** it can receive DAB program-accompanying data.

4. Portable radio receiver according to the preceding claims, **characterized in that** it can receive DVB program-accompanying data.

5. Portable radio receiver according to one of the preceding claims, **characterized in that** said data processing means can execute applets and/or programs that are contained in said program-accompanying data.

6. Portable radio receiver according to one of the preceding claims, **characterized in that** said contactless interface (41) comprises a RFID element.

7. Portable radio receiver according to one of the claims 1 to 5, **characterized in that** said contactless interface (41) is a Bluetooth interface.

8. Portable radio receiver according to one of the claims 1 to 5, **characterized in that** said contactless interface (41) is a HomeRF interface.

9. Portable radio receiver according to one of the preceding claims, **characterized in that** said user-specific data comprise identification data of the user.

10. Portable radio receiver according to the preceding claim, **characterized in that** said identification data comprise an electronic certificate of the user.

11. Portable radio receiver according to claim 9, **characterized in that** said identification data comprise an image of the user.

12. Portable radio receiver according to claim 9, **characterized in that** said identification data comprise biometric parameters of the user.

13. Portable radio receiver according to one of the preceding claims, **characterized in that** said user-specific data comprise authorization data of the user for using said external devices.

14. Portable radio receiver according to the preceding claim, **characterized in that** said authorization data can be modified with program-accompanying data.

15. Portable radio receiver according to the preceding claim, **characterized in that** said authorization data concern the use of public transportation.

16. Portable radio receiver according to one of the preceding claims, **characterized in that** it comprises location-determining means.

17. Portable radio receiver according to the preceding claim, **characterized in that** said location-determining means can determine the location from satellite signals.

18. Portable radio receiver according to the preceding claim, **characterized in that** said location-determining means comprise a GPS receiver.

19. Portable radio receiver according to one of the preceding claims, **characterized in that** it comprises a data filter for program-accompanying data.

20. Portable radio receiver according to the preceding claim, **characterized in that** said data filter is dependent on the user's location.

21. Portable radio receiver according to claim 19, **characterized in that** said data filter can be set by the user.

22. Portable radio receiver according to one of the preceding claims, **characterized in that** it comprises a mobile radio communication part.

23. Portable radio receiver according to the preceding claim, **characterized in that** said mobile radio communication part comprises a GSM receiver.

24. Portable radio receiver according to claim 22, **characterized in that** said mobile radio communication part comprises a UMTS receiver.

25. Portable radio receiver according to one of the preceding claims, **characterized by** an additional storage area in which blocking data downloaded over said radio receiver can be stored.

26. Portable radio receiver according to one of the preceding claims, **characterized by** visual reproduction means (400).

27. Portable radio receiver according to the preceding claim, **characterized by** VRD reproduction means.

28. Portable radio receiver according to one of the preceding claims, in the form of a chip-card (44).

29. Portable radio receiver according to one of the preceding claims, in the form of a wristwatch (43).

30. Use of a portable radio receiver (4) according to one of the preceding claims as identification module for traffic telematics applications.

31. Method for administrating from a central place the authorization of a plurality of users, **characterized by**:
sending authorization data in broadcast mode as program-accompanying data,
receiving these authorization data in portable radio receivers (4) according to one of the claims 1 to 29, with which the users are provided,
filtering the authorization data concerning the user of a radio receiver in a filter in the radio receiver,
storing the authorization data in the radio receiver.

## Revendications

1. Récepteur radio portable (4), avec lequel on peut recevoir des programmes d'un émetteur radio central (1) et des données accompagnant le programme, avec
un module d'identification (40) de la forme d'une carte à puces amovible, dans laquelle des données spécifiques à l'utilisateur sont sauvegardées,
une interface sans contact (41) à travers laquelle une connexion radio peut être établie avec des dispositifs externes à proximité afin d'envoyer lesdites données spécifiques à l'utilisateur ces dispositifs externes,
**caractérisé en ce que** desdites données accompagnant le programme sont sauvegardées dans le module d'identification (40).

2. Récepteur radio portable selon la revendication précédente, **caractérisé en ce que** lesdites données accompagnant le programme peuvent être traitées par ledit module d'identification (40).

3. Récepteur radio portable selon l'une des revendications précédentes, **caractérisé en ce qu'**il peut recevoir des données DAB accompagnant le programme.

4. Récepteur radio portable selon l'une des revendications précédentes, **caractérisé en ce qu'**il peut recevoir des données DVB accompagnant le programme.

5. Récepteur radio portable selon l'une des revendications précédentes, **caractérisé en ce que** lesdits moyens de traitement de données peuvent exécuter des applets et/ou des programme qui sont contenus dans lesdites données accompagnant le programme.

6. Récepteur radio portable selon l'une des revendications précédentes, **caractérisé en ce que** ladite interface sans contact (41) contient un élément RFID.

7. Récepteur radio portable selon l'une des revendications 1 à 5, **caractérisé en ce que** ladite interface sans contact (41) est une interface Bluetooth.

8. Récepteur radio portable selon l'une des revendications 1 à 5, **caractérisé en ce que** ladite interface sans contact (41) est une interface HomeRF.

9. Récepteur radio portable selon l'une des revendications précédentes, **caractérisé en ce que** les données spécifiques à l'utilisateur comprennent des données d'identification de l'utilisateur.

10. Récepteur radio portable selon la revendication 9, **caractérisé en ce que** lesdites données d'identification de l'utilisateur comprennent un certificat électronique de l'utilisateur.

11. Récepteur radio portable selon la revendication 9, **caractérisé en ce que** lesdites données d'identification de l'utilisateur comprennent une image de l'utilisateur.

12. Récepteur radio portable selon la revendication 9, **caractérisé en ce que** lesdites données d'identification de l'utilisateur comprennent des paramètres biométriques de l'utilisateur.

13. Récepteur radio portable selon l'une des revendications précédentes, **caractérisé en ce que** lesdites données spécifiques à l'utilisateur comprennent des données d'autorisation de l'utilisateur pour utiliser lesdits dispositifs externes.

14. Récepteur radio portable selon la revendication précédente, **caractérisé en ce que** lesdites données d'autorisation de l'utilisateur peuvent être modifiées avec des données accompagnant le programme.

15. Récepteur radio portable selon la revendication précédente, **caractérisé en ce que** lesdites données d'autorisation de l'utilisateur concernent l'utilisation de moyens de transport publics.

16. Récepteur radio portable selon l'une des revendications précédentes, **caractérisé en ce qu'**il comprend des moyens de localisation.

17. Récepteur radio portable selon la revendication précédente, **caractérisé en ce que** lesdits moyens de localisation peuvent déterminer la localisation à partir des signaux satellites.

18. Récepteur radio portable selon la revendication précédente, **caractérisé en ce que** lesdits moyens de localisation comprennent un récepteur GPS.

19. Récepteur radio portable selon l'une des revendications précédentes, **caractérisé en ce qu'**il comprend un filtre de données pour les données accompagnant le programme.

20. Récepteur radio portable selon la revendication précédente, **caractérisé en ce que** ledit filtre de données dépend de la localisation de l'utilisateur.

21. Récepteur radio portable selon la revendication 19, **caractérisé en ce que** ledit filtre de données peut être réglé par l'utilisateur.

22. Récepteur radio portable selon l'une des revendications précédentes, **caractérisé en ce qu'**il comprend une partie pour la communication radiomobile.

23. Récepteur radio portable selon la revendication précédente, **caractérisé en ce que** ladite partie pour la communication radiomobile comprend un récepteur GSM.

24. Récepteur radio portable selon la revendication 22, **caractérisé en ce que** ladite partie pour la communication radiomobile comprend un récepteur UMTS.

25. Récepteur radio portable selon l'une des revendications précédentes, **caractérisé par** une zone de mémoire additionnelle dans laquelle des données de verrouillage téléchargées par ledit récepteur radio peuvent être sauvegardées.

26. Récepteur radio portable selon l'une des revendications précédentes, **caractérisé par** des moyens de restitution visuels (400).

27. Récepteur radio portable selon la revendication précédente, **caractérisé par** des moyens de restitution VRD.

28. Récepteur radio portable selon l'une des revendications précédentes, sous la forme d'une carte à puces (44).

29. Récepteur radio portable selon l'une des revendications précédentes, sous la forme d'une montre bracelet (43).

30. Utilisation d'un récepteur radio portable (4) selon l'une des revendications précédentes comme module d'identification pour des applications de trafic télématique.

31. Méthode pour administrer l'autorisation d'une pluralité d'utilisateurs depuis un endroit central, **caractérisé par**:
l'émission de données d'autorisation comme données accompagnant le programme dans un mode broadcast,
la réception de ces données d'autorisation dans un récepteur radio portable (4) selon l'une des revendications 1 à 29, dont les utilisateurs sont équipés,
le filtrage des données d'autorisation concernant l'utilisateur du récepteur radio portable dans un filtre dans le récepteur radio,
la sauvegarde des données d'autorisation dans le récepteur radio.
